(19) Europäisches Patentamt
European Patent Office
Office européen des brevets

(11) **EP 2 954 119 B1**

## (12) FASCICULE DE BREVET EUROPEEN

(45) Date de publication et mention
de la délivrance du brevet:
**08.07.2020 Bulletin 2020/28**

(21) Numéro de dépôt: **14702881.5**

(22) Date de dépôt: **06.02.2014**

(51) Int Cl.:
*E02D 17/12* (2006.01)　　*C04B 28/02* (2006.01)
*C04B 28/06* (2006.01)　　*C04B 28/10* (2006.01)

(86) Numéro de dépôt international:
**PCT/EP2014/052341**

(87) Numéro de publication internationale:
**WO 2014/122217 (14.08.2014 Gazette 2014/33)**

### (54) LIANT POUR REMBLAI AUTOCOMPACTANT ET REEXCAVABLE

BINDEMITTEL FÜR SELBSTVERDICHTENDE UND ERNEUT HERAUSLÖSBARE HINTERFÜLLUNG

BINDER FOR SELF-COMPACTING AND RE-EXCAVATABLE BACKFILL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2013 BE 201300082**

(43) Date de publication de la demande:
**16.12.2015 Bulletin 2015/51**

(73) Titulaire: **Etablissements Hublet**
**5150 Floreffe (BE)**

(72) Inventeur: **NONET, Aurélien**
**B-5170 Lesve (BE)**

(74) Mandataire: **Gevers Patents**
**Intellectual Property House**
**Holidaystraat 5**
**1831 Diegem (BE)**

(56) Documents cités:
**EP-A1- 1 298 254　　DE-A1- 3 215 777**
**DE-A1- 4 316 518　　FR-A1- 2 758 378**
**US-A- 4 374 672　　US-A- 5 693 137**

• E. Nonet: "Matériaux auto-compactant ré-excavables", Centre de recherches routières , 2012, XP002713774, Extrait de l'Internet: URL:http://www.brrc.be/60years/papers/wk1/ Presentation05_Nonet.pdf [extrait le 2013-09-26]
• Hublet: "Fiche Technique: Fluidoroc Flash", , 4 février 2013 (2013-02-04), XP002713686, Extrait de l'Internet: URL:http://www.hublet-ets.be/sites/default /files/FT%20Fluidoroc%20Flash.pdf [extrait le 2013-09-26]

Remarques:
Le dossier contient des informations techniques présentées postérieurement au dépôt de la demande et ne figurant pas dans le présent fascicule.

**Description**

La présente invention se rapporte à une composition de liant d'un remblai autocompactant et réexcavable à prise rapide de classe 1 (MAR 1) ou 2 (MAR 2) selon le guide *Qualiroute version 2012* de la Région Wallonne. Plus précisément, cette composition de liant est destinée à être utilisée pour fabriquer un remblai employé par exemple dans le cadre du remblayage des tranchées de différents types comme par exemple les tranchées de fouille ou les tranchées de raccordement de réseaux d'eau, de gaz, d'électricité, de téléphone, etc., ledit remblayage pouvant être réalisé aussi bien en voirie, qu'en accotement.

Actuellement, les remblais autocompactant existant sur le marché qui permettent une restitution rapide à la circulation (par exemple la circulation autoroutière) du tronçon de voirie traité, par exemple une route ou une autoroute, utilisent deux principes différents (l'un, l'autre, ou une combinaison des deux):

   1) une quantité de liant (généralement de type ciment *Portland®,* souvent du CEM I 52,5R) plus importante ; et

   2) une amélioration de la portance faite par drainage d'une partie importante de l'eau dans le milieu environnant, ce qui les classes parmi les MAR de type essorable.

Malheureusement, l'ajout d'une quantité plus importante de liant, c'est-à-dire l'utilisation de plus de 50 kg de ciment par $m^3$ de remblai fait généralement quitter le produit fini (c'est-à-dire le remblai) de la classe 1 (on parle de MAR 1), parfois même de la classe 2 (MAR 2) de réexcavabilité.

Une conséquence est qu'il n'est plus garanti que les réseaux recouverts par le type de remblai susmentionné puissent être dégagés par la suite sans subir de dégâts. En outre, les délais nécessaires à la prise de ce type de remblai est toujours de l'ordre de deux à trois heures pour les versions actuelles à prise rapide.

Par ailleurs, une étape de drainage, qui n'est en outre possible que si le milieu dans lequel on effectue les opérations de remblayage est drainant, est généralement lente, ce qui est peu favorable à un procédé de remblayage qui doit être réalisé dans un laps de temps court (de telle sorte que, par exemple, un tronçon de route traité soit restitué rapidement (dans un délais de 2 à 12h) à la circulation et que les perturbations liées au chantier de remblayage soient limitées dans le temps.

L'état de la technique en vue de la présente invention est représenté par le document EP1298254A1. Ce document divulgue un remblai autocompactant composé d'un déblais auquel est ajouté de l'eau et une composition liante formée par du ciment éventuellement additionné d'un agent de prise.

L'invention a pour but de pallier les inconvénients de l'état de la technique en procurant une composition de liant permettant la fabrication d'un remblai autocompactant et réexcavable présentant une prise rapide, une réexcavabilité aisée ainsi qu'une efficacité accrue tant en milieu drainant (perméable) qu'en milieu non-drainant (imperméable).

Par les termes « prise rapide », on entend au sens de l'invention la capacité dans un laps de temps de maximum 60 minutes, de préférence dans un délai compris entre 20 et 40 minutes après la mise en œuvre du remblai, d'atteindre une portance supérieure à 17MPa mesurée par un essais de plaque [méthode de mesure du C.R.R.(Centre de recherches Routières - Belgique) - MF 40/78 publiée en 1978].

Par les termes « réexcavabilité aisée », il faut entendre un remblai de classe MAR 1 ou 2, c'est-à-dire dont la valeur d'écrasement de cubes est inférieure à 0,7 MPa pour la Classe 1 ou comprise entre 0,7 et 2MPa pour la classe 2. De préférence cette valeur est comprise entre 0,3 et 0,6 MPa. La valeur d'écrasement, correspondant à la charge de rupture, étant mesurée sur des cubes 28 jours après la mise en œuvre du remblai et conservé à une température de 20 °C $\pm$ 4°C et une humidité relative de l'air de 50 % $\pm$ 10%.

Par les termes « efficacité accrue même en milieu non-drainant », on entend que le tronçon de voirie traité a atteint les performances nécessaires et suffisantes pour être ensuite restitué à la circulation dans un délai de maximum 60 minutes, de préférence sans qu'une étape de drainage du remblai ne soit nécessaire : c'est-à-dire, sans qu'une quantité d'eau supérieure à 15 l par $m^3$ de remblai ne doit être absorbée par le terrain ou enlevée artificiellement (c'est-à-dire par l'action de l'homme, par exemple, par drainage ou pompage).

Pour résoudre ce problème, il est prévu suivant l'invention, une composition de liant hydraulique destinée à être utilisée pour former un remblai autocompactant et réexcavable, ladite composition de liant hydraulique comprenant :

- des cendres volantes dans une teneur comprise entre 70 % en poids et 90 % en poids, avantageusement entre 75 % en poids et 85 % en poids, sur base du poids total de la composition de liant hydraulique ;
- du ciment alumineux dans une teneur comprise entre 5 % en poids et 20 % en poids, sur base du poids total de la composition de liant hydraulique ;
- de la chaux hydratée dans une teneur comprise entre 0,05 % en poids et 15 %, de préférence entre 0,5 % en poids et 6 % en poids, avantageusement entre 1 % en poids et 5 % en poids, sur base du poids total de la composition de liant hydraulique,

la composition de liant hydraulique étant destinée à être mélangée à une composition de granulat et à de l'eau pour former le remblai autocompactant et réexcavable.

Par le terme « composition de granulat », on entend au sens de la présente invention une pluralité ou un mélange d'une pluralité de particules et/ou de grains de granulats de sable, de gravier, et de caillou constitutifs des mortiers et bétons.

Par le terme « grain », on entend au sens de la présente invention un agrégat ou un agglomérat des particules.

Un agrégat se définit dans le cadre de la présente invention comme étant un ensemble d'atomes et/ou de molécules reliées entre eux par des forces de cohésion forte, c'est-à-dire par des forces de type pont hydrogène, des forces de cohésion de type covalentes ou des forces de type ioniques. Il faut en outre entendre que ledit agrégat peut être formé par l'action d'au moins une force de cohésion forte entre les particules.

Un agglomérat de particules est un ensemble de ensemble d'atomes et/ou de molécules reliées entre eux par des forces de cohésions fortes, c'est-à-dire par des forces de type Van der Waals. Il faut en outre entendre que ledit agglomérat peut être formé par l'action d'au moins une de ces forces de cohésion faible entre les particules.

Dans le cadre de la présente invention, il a été observé de manière surprenante que le liant joue à la fois le rôle de lubrifiant entre les particules et/ou les grains de la composition granulat composant le remblai et le rôle de liant entre les particules par le phénomène de prise hydraulique à l'origine du figeage et donc de la résistance mécanique du remblai formé avec la composition de liant hydraulique selon l'invention.

Ainsi, d'un côté, la composition de liant hydraulique selon l'invention, de par sa qualité de lubrifiant, permet, d'obtenir un remblai dont la réexcavation ultérieure pourra être aisément effectuée : un remblai de classe MAR 1 ou 2 de type non-essorable (lorsque le remblai est capable de faire sa prise même placé en milieu imperméable à l'eau) est ainsi obtenu.

L'obtention d'un remblai de classe MAR 1 ou 2 est d'autant plus avantageuse lorsque la réexcavation dudit remblai est réalisée au voisinage des câbles et canalisations enrobés, conditions de travail particulières dans lesquelles la réexcavation du remblai doit nécessiter une exécution précise et pour cela, une exécution la moins motorisée possible, voire manuelle.

D'un autre côté, de par sa prise à l'eau, la composition de liant hydraulique permet d'obtenir un remblai de classe MAR 1 ou 2 dans un délai particulièrement court, permettant une restitution rapide à la circulation du tronçon de voirie traité : ce remblai satisfaisant alors les critères de valeur de portance supérieur ou égale à 17 MPa après prise du remblai et de valeur d'affaissement du cône d'Abrams supérieure ou égale à 24 cm avant prise du remblai.

Alternativement, la composition de liant hydraulique comprend de la chaux hydratée dans une teneur comprise entre 1 % en poids et 15 % en poids, de préférence entre 7 % en poids et 15 % en poids, sur base du poids total de ciment alumineux et de chaux hydratée.

Le rôle de la chaux hydratée est d'accélérer la prise hydraulique du ciment alumineux.

Avantageusement, la composition de liant hydraulique est caractérisée en ce que lesdites cendres volantes présentent une courbe granulométrique caractérisée par un $d_{80}$ compris entre 0,04 mm et 0,125 mm.

Dans le cadre de la présente invention, un $d_{80}$, par exemple, égal à 0,04 mm représente une fraction pondérale de 80% de cendres volantes (sur base du poids total des cendres volantes) qui présente des particules et/ou des grains dont le diamètre est inférieur à 0,04 mm.

Eventuellement, la composition de liant hydraulique est caractérisée en ce que lesdites cendres volantes présentent une densité volumique de $2,31 \times 10^3$ kg/m$^3$ $\pm$ 0,20 x 10$^3$ kg/m$^3$.

De préférence, 100 % de la composition de liant hydraulique selon l'invention est composée des cendres volantes, du ciment alumineux, et de la chaux hydratée.

En particulier, la composition de liant hydraulique se présente sous une forme pulvérulente.

Toutefois, la composition de liant hydraulique peut comprendre de manière additionnelle au moins un superplastifiant et/ou de l'eau.

De préférence, ledit superplastifiant, l'eau, les cendres volantes, le ciment alumineux, et la chaux hydratée représentent 100 % du poids de la composition de liant hydraulique.

Alternativement, la composition de liant hydraulique comprenant de l'eau se présente sous une forme de pâte.

Dans un mode particulier de réalisation, la composition de liant hydraulique est caractérisée en ce qu'elle comprend au moins un superplastifiant choisi de préférence dans le groupe des dérivés polycarboxyliques, avantageusement des dérivés de l'éther polycarboxylique, ledit au moins un superplastifiant étant présent dans une teneur en extrait sec comprise entre $2,7 \times 10^{-4}$ % en poids et $3,4 \times 10^{-3}$ % en poids sur base du poids total de la composition de liant hydraulique.

Par les termes « en extrait sec », il faut entendre au sens de la présente invention un superplastifiant anhydre.

Le rôle du superplasitifiant est de diminuer la quantité en eau nécessaire à la production du remblai.

D'autres formes de réalisation de la composition de liant hydraulique suivant l'invention sont indiquées dans les revendications annexées.

La présente invention porte par ailleurs sur une composition de remblayage comprenant une composition de granulat et la composition de liant hydraulique selon l'invention.

Cette composition de remblayage est prête à être mélangée à de l'eau, de préférence gâchée avec de l'eau, pour former ledit remblai autocompactant et réexcavable : on parle d'une prise ou prise hydraulique du remblai.

Dans un mode préférentiel de mise en œuvre, la composition comprend une composition de granulat dans une teneur comprise entre 80 % en poids et 95 % en poids, de préférence entre 80,5 % en poids et 95 % en poids sur base du poids total de ladite composition de remblayage, et la composition de liant hydraulique selon l'invention dans une teneur comprise entre 4 % en poids et 14 % en poids, de préférence entre 6 % en poids et 10 % en poids, sur base du poids total de ladite composition de remblayage.

La composition de remblayage peut éventuellement être complétée d'eau ou d'autres additifs comme par exemple des entraineurs d'air.

Eventuellement, la composition de remblayage selon l'invention comprend une composition de granulat présentant une courbe granulométrique centrée sur le fuseau granulométrique défini par l'équation de Fuller et Thompson suivante :

$$p = 100 \left(\frac{d}{D}\right)^n$$

où :

p représente la fraction passante (en % sur base du poids total de la composition de granulat) du poids en particules et/ou de grains de granulat ou de sable ;

d représente la taille (en mm) des mailles du tamis ;

D représente le diamètre maximal (en mm) des particules et/ou des grains de granulats et est compris entre 5 et 10 mm ;

n est un facteur expérimental choisi dans une plage de valeur comprise entre 0,30 et 0,55.

Dans un mode particulier de réalisation de la présente composition de remblayage, ces paramètres sont fixés comme suit :

d est compris entre 0 mm et 12,5 mm ;

D vaut 10 mm ; et

n est fixé à 0,40.

Pour ce mode particulier de réalisation, les valeurs de d et de p sont par exemple les suivantes :

| d | p | | |
|---|---|---|---|
| | p§ | p MIN (%)* | p MAX (%)** |
| 14 | 100 | | |
| 10 | 100 | 85 | 100 |
| 8 | 91,5 | 76,5 | 100 |
| 6 | 81,5 | 66,5 | (entre 91,5 et 100) |
| 5 | 75,8 | 60,8 | (entre 85,8 et 90) |
| 4 | 69,3 | 54,3 | 79,3 |
| 2 | 52,5 | 37,5 | 62,5 |
| 1 | 39,8 | 24,8 | 49,8 |
| 0,5 | 30,2 | 15,2 | 40,2 |

(suite)

| d | p | | |
|---|---|---|---|
| | $p^{\S}$ | $p$ MIN (%)* | $p$ MAX (%)** |
| 0,2 | 20,9 | 5,9 | 30,9 |
| 0,063 | 13,2 | 0 | 23,2 |

§: Fraction passante (en % sur base du poids total de la composition de granulat) du poids en particules et/ou de grains de granulat ou de sable.

*: Fraction passante minimale (en % sur base du poids total de la composition de granulat) du poids en particules et/ou de grains de granulat ou de sable (de préférence, $p$ MIN = $p$ - 15, avec $p$ MIN supérieur ou égal à 0).

** : Fraction passante maximale (en % sur base du poids total de la composition de granulat) du poids en particules et/ou de grains de granulat ou de sable (de préférence, $p$ MAX = $p$ + 10, avec $p$ MAX inférieur ou égal à 100).

De préférence, $p$ est compris entre 0 et 100, et présente avantageusement une valeur comprise entre la valeur de $p$ MIN et la valeur de $p$ MAX.

Avantageusement, la composition de remblayage comprend une composition de granulat présentant une distribution de tailles de particules et/ou de grains caractérisée par un $d_{100}$ compris entre 6 mm et 17 mm, un $d_{95}$ entre 5 mm et 12 mm, un $d_{50}$ entre 1 mm et 5 mm, et un $d_{30}$ entre 0,3 mm et 1 mm.

De préférence, la composition de remblayage comprend une composition de granulat présentant une distribution de tailles de particules et/ou de grains caractérisée par un $d_{70}$ compris entre 3 et 7 mm.

Dans un mode préférentiel de réalisation, la composition de remblayage comprend une composition de granulat présentant une distribution de tailles de particules et/ou de grains caractérisée par un $d_{30}$ compris entre 0,3 et 0,9 mm.

Préférentiellement, la composition de granulat présente une distribution de tailles de particules et/ou de grains caractérisée par un $d_{20}$ compris entre 0,1 et 0,5 mm.

Dans la cadre de la présente invention, la notation $d_X$ représente un diamètre, exprimé en mm, sur base duquel X % en poids (sur base du poids total de la composition de granulat) des particules et/ou des grains mesurés sont plus petits.

De manière avantageuse, la composition de granulat comprend des particules et/ou des grains qui sont du sable naturel, du sable de concassage, des granulats de carrière ainsi que des granulats recyclés, ou un de leurs mélange.

De préférence, la composition de granulat comprend des particules et/ou des grains qui sont un des mélanges suivants :

- sable naturel/ sable de concassage ;
- sable naturel/ granulats de carrière ;
- sable naturel/ granulats recyclés ;
- sable de concassage/granulats de carrière ;
- sable de concassage/ granulats recyclés ;
- granulats de carrière/ granulats recyclés ;
- sable naturel/ sable de concassage/ granulats de carrière ;
- sable naturel/ sable de concassage/ granulats recyclés ;
- granulats de carrière/ granulats recyclés/ sable naturel ; ou
- granulats de carrière/ granulats recyclés/ sable de concassage.

D'autres formes de réalisation de la composition de remblayage suivant l'invention sont indiquées dans les revendications annexées.

La présente invention porte en outre sur un remblai autocompactant et réexcavable comprenant ladite composition de remblayage selon l'invention et de l'eau.

De préférence, l'eau est ajoutée à ladite composition de remblayage dans une teneur comprise entre 6 % et 15 % en poids, de préférence entre 7 % et 8 % en poids, idéalement de 7,1 % en poids sur base du poids total de ladite composition de remblayage.

Le remblai selon l'invention peut en outre comprendre au moins un superplastifiant, de préférence choisi dans le groupe des dérivés polycarboxyliques, avantageusement des dérivés de l'éther polycarboxylique, ledit au moins un superplastifiant étant présent dans une teneur comprise entre 0,1 l et 1,0 l par m$^3$ de remblai.

D'autres formes de réalisation du remblai suivant l'invention sont indiquées dans les revendications annexées.

Dans le cadre d'une utilisation pour remblayer les voiries, l'invention porte aussi sur un procédé de fabrication du remblai autocompactant et réexcavable selon l'invention, comprenant les étapes suivantes :

- une amenée d'un premier volume (V1) prédéterminé d'une composition de granulat dans une chambre de malaxage présentant un deuxième volume (V2) prédéterminé ;
- une amenée d'un troisième volume (V3) d'un mélange de ladite composition de liant hydraulique et d'eau ou d'une phase aqueuse; et
- un malaxage de ladite composition de granulat, de l'eau ou de la phase aqueuse, et de la dite composition de liant hydraulique pour former ledit remblai autocompactant et réexcavable.

De préférence, le procédé comprend, précédemment à l'étape d'amenée dudit troisième volume (V3), une étape de mesure d'une différence de volume ($\Delta V$) entre ledit deuxième volume prédéterminé (V2) et ledit premier volume prédéterminé (V1), ledit troisième volume (V3) et la différence de volume ($\Delta V$) étant présents dans un rapport (V3)/($\Delta V$) compris entre 0,75 et 1,5.

Alternativement, ledit troisième volume (V3) est au moins égal à ladite différence de volume mesurée ($\Delta V$).

De manière avantageuse, ladite première étape de ce procédé est précédée d'une étape de formation de ladite composition de granulat par une amenée d'au moins deux granulats, chaque granulat étant amené à un volume prédéterminé, pour former ledit premier volume (V1) de ladite composition de granulat.

Eventuellement, ladite première étape de ce procédé est précédée d'une étape de formation dudit troisième volume (V3) d'une pâte de la composition de liant par le mélange de ladite composition de liant hydraulique avec de l'eau ou une phase aqueuse.

Préférentiellement, l'eau (ou la phase aqueuse) et ladite composition de liant hydraulique sont amenées séparément dans la chambre de malaxage.

Alternativement, l'eau (ou la phase aqueuse) est amenée dans l'amenée du granulat, dans ladite chambre de malaxage, à ladite composition de remblayage, ou encore dans ladite amenée de la composition de liant hydraulique.

Eventuellement, au moins un superplastifiant est en outre ajouté à ladite composition de granulat, à ladite composition de liant hydraulique, ou à l'eau, ou encore séparément dans la chambre de malaxage.

De manière avantageuse, les étapes susmentionnées sont réalisées simultanément.

Le procédé comprend en outre une étape de placement dudit remblai autocompactant et réexcavable dans des tranchées.

D'autres formes de réalisation du procédé suivant l'invention sont indiquées dans les revendications annexées.

En outre, la présente invention porte sur l'utilisation de la composition de liant hydraulique selon l'invention pour la formation d'un remblai autocompactant et réexcavable, ladite composition de liant hydraulique étant destinée à être mélangée à une composition de granulat et à de l'eau pour former ledit remblai autocompactant et réexcavable.

D'autres formes de réalisation de cette utilisation suivant l'invention sont indiquées dans les revendications annexées.

La présente invention porte aussi sur l'utilisation de la composition de remblayage selon l'invention pour la formation d'un remblai autocompactant et réexcavable, ladite composition de remblayage étant destinée à être mélangée à de l'eau pour former ledit remblai autocompactant et réexcavable.

D'autres formes de réalisation de cette utilisation suivant l'invention sont indiquées dans les revendications annexées.

En outre, d'autres caractéristiques, détails et avantages de l'invention ressortiront de la description donnée ci-après, à titre non limitatif.

**Composition préférentielle de la composition de liant hydraulique**

Dans un mode de réalisation préférentiel de la composition de liant hydraulique selon la présente invention, ce dernier se présente sous la forme d'une pâte comprenant :

(i) des cendres volantes ;
(ii) du ciment alumineux ;
(iii) de l'eau ; et éventuellement
(iv) de la chaux hydratée ; et/ou alternativement
(v) d'au moins un additif superplastifiant.

Les cendres volantes sont un sous-produit industriel.

Le rôle des cendres volantes est d'assurer la fluidité à la composition de liant hydraulique entre le moment de la production de cette dernière et le début de la prise, c'est-à-dire une fois mélangée à la composition de granulat.

La courbe granulométrique des cendres volantes comprend une fraction de 20 % $\pm$ 10% en poids sur base du poids total des cendres volantes dont les particules ou grains de cendres présente un diamètre supérieure à 0,04 mm.

La densité volumique des cendres volantes est de 2,31 $\pm$ 0,20 tonnes par m$^3$.

De manière préférentielle, la fraction en cendres volantes exprimée en kg par m$^3$ de remblai à produire est comprise entre 65 kg/m$^3$ et 225 kg/m$^3$.

Le ciment alumineux, également appelé ciment fondu, de la composition de liant hydraulique répond à la norme EN14647 de 2005 et est présent dans une teneur optimale de 24,9 kg par m$^3$ de remblai obtenu.

La teneur en ciment alumineux est comprise entre 15,0 kg et 45,0 kg par m$^3$ de remblai. Un telle plage de valeur pour la teneur en ciment alumineux permet d'obtenir une performance de portance de 17 MPa à l'essai routier de portance à la plaque [méthode de mesure du C.R.R.(Centre de recherches Routières - Belgique) - MF 40/78] dans un laps de temps compris entre 5 minutes et 60 minutes, tout en limitant la résistance à l'écrasement, caractérisée par l'écrasement en laboratoire d'un cube de 15 cm ± 1 cm d'arête, à une valeur inférieure ou égale à 0,7 MPa pour une classe de résistance MAR-1 ou à 2,0 MPa pour une classe de résistance MAR-2.

La chaux hydratée présente dans la composition de liant hydraulique est de préférence une chaux pulvérulente.

La teneur en chaux hydratée dépend de la teneur en ciment alumineux.

De préférence, la composition de liant hydraulique comprend de la chaux hydratée dans une teneur comprise entre 7 % en poids et 15 % en poids sur base du poids total en ciment alumineux et en chaux hydratée.

La composition de liant hydraulique comprend 11 % de chaux sur base du poids total en ciment alumineux et en chaux hydratée.

Afin d'obtenir la fluidité souhaitée, on peut en outre incorporer dans la composition de liant hydraulique un superplastifiant hautement réducteur d'eau de la famille des polycarboxilates, comme les éthers polycarboxyliques. Par exemple, le superplastifiant peut être le *ViscoCrete 1020®* ou le *ViscoCrete 2200HE®* de la firme Sika. Le dosage en superplastifiant est compris entre 0,2 l et 1,0 l par m$^3$ de remblai, idéalement entre 0,3 l et 0,5 l par m$^3$ de remblai, à teneur en extrait sec de 34% en volume de superplasifiant.

Le dosage, ramené en polycarboxilates concentré à 100% correspond donc à une plage de valeurs comprises entre 0,06 kg et 0,35 kg de préférence entre 0,10 kg et 0,17 kg, par m$^3$ de remblai.

Comme signalé précédemment, l'emploi d'un ou plusieurs additifs superplastifiants permet de diminuer la quantité d'eau nécessaire pour fabriquer le remblai.

Eventuellement, de l'eau peut être ajoutée à la composition de liant hydraulique pulvérulente pour former une pâte.

Toutefois, il y a lieu de veiller à ce que la quantité d'eau ajoutée à la composition pulvérulente n'excède pas une quantité nécessaire et suffisante pour assurer un affaissement au cône d'Abrams du remblai supérieure ou égale à 24 cm.

En fonction de la quantité en composition de liant hydraulique ainsi que de la quantité et de la nature chimique et/ou des caractéristiques granulométriques de la composition de granulat, ainsi que de la teneur en eau de la composition de granulat, la quantité d'eau ajoutée à la composition de liant hydraulique pulvérulente est comprise entre 50 l et 200 l par m$^3$ de remblai.

**Composition préférentielle de granulat de remblai**

La composition de granulat, encore appelée dans le cadre de la présente invention « le granulat de remblai » peut comprendre un granulat naturel ou un granulat recyclé, ou un mélange des deux. En outre, le granulat de remblai est de préférence un mélange de plusieurs granulats ou d'au moins un sable et d'au moins un granulat, chaque sable et chaque granulat présentant une courbe granulométrique propre.

Dans ce contexte, la courbe granulométrique du granulat de remblai [mesurée à sec selon la norme Qualiroute version 2012 - CME 01.01 - ANALYSE GRANULOMETRIQUE DES SOLS: METHODE PAR TAMISAGE ET METHODE AREOMETRIQUE] est composée de plusieurs courbes granulométriques propres afin d'obtenir une granulométrie continue comprise dans le fuseau suivant :

| Taille maille (d en mm) | Passant MIN (%)* | Passant MAX (%)** |
|:---:|:---:|:---:|
| 17 | 100 | |
| 10 | 85 | 100 |
| 6 | 60 | 700 |
| 5 | 50 | 95 |
| 3 | 40 | 70 |
| 1 | 30 | 50 |

(suite)

| Taille maille (d en mm) | Passant MIN (%)* | Passant MAX (%)** |
|---|---|---|
| 0,5 | 20 | 40 |

*: Fraction passante minimale (en % sur base du poids total de la composition de granulat) du poids en particules et/ou de grains de granulat ou de sable.

**: Fraction passante maximale (en % sur base du poids total de la composition de granulat) du poids en particules et/ou de grains de granulat ou de sable.

Cette courbe granulométrique peut être réalisée avec des granulats de carrière, du sable naturel, des granulats de recyclé, des granulats de recyclés de béton, des sables de concassage, des granulats synthétiques ou des sables synthétiques.

La courbe granulométrique du granulat ne doit pas contenir des particules et/ou des grains dont le diamètre est supérieur à 40 mm. Idéalement, les particules ou grains présentent un diamètre maximal compris entre 5 mm et 15 mm. De manière optimale, les particules et/ou les grains présentent un diamètre maximal compris entre 5 mm et 10 mm.

De préférence, le diamètre maximal des particules et/ou des grains du granulat est inférieur ou égal à 10 mm pour un granulat naturel et est inférieur ou égal à 15 mm pour un granulat recyclé comprenant des briquaillons. Il est à noter que pour des diamètres de particules et/ou des grains plus élevés, il est difficile voire même impossible de réexcaver ultérieurement le remblai obtenu par des moyens manuels (on passe de *facto* d'un remblai de classe MAR 1 ou 2 vers un remblai de classe MAR 2 ou 3).

La courbe granulométrique des particules ou grains est choisie afin de limiter autant que possible la quantité nécessaire en composition de liant hydraulique afin de combler l'espace créé entres les particules et/ou les grains du granulat de remblai.

De préférence, la courbe granulométrique du granulat de remblai est choisie de manière à ce qu'elle soit centrée sur le fuseau granulométrique défini par l'équation de Fuller et Thompson (dont le paramètre *n* est compris entre 0,30 et 0,55).

Plus le profil granulométrique de la composition de granulat s'approche de la courbe de Fuller et Thompson choisie, plus on s'approche de la densité optimale du mélange de granulats composant la composition de granulat, ce qui est recherché. On mélange donc des sables et granulats afin d'atteindre cet objectif.

Les différents constituants qui peuvent être utilisés pour la réalisation du granulat de remblai sont les suivants :

(i) un mélange de différents sables naturels ;
(ii) un mélange de différents sables et de granulats recyclés ;
(iii) un mélange de différents granulats naturels (concassés ou roulés) ;
(iv) un mélange de différents granulats recyclés (débris de béton, débris de pierre naturelle ou mixte) ;
(v) un mélange de différents granulats artificiels ; ou
(vi) au moins une combinaison des mélanges susmentionnés.

De manière préférentielle, le granulat de remblai comprend au moins un type de sable et au moins un type de granulat. Pour chaque couple sable/granulat pour lequel une courbe granulométrique propre est choisie, il y aura lieu d'adapter la composition et la quantité de la composition de liant hydraulique afin d'atteindre la courbe granulométrique du remblai préalablement souhaitée.

**Procédés de fabrication du remblai et de mise en œuvre**

Par les termes « procédés de fabrication », on entend au sens de la présente invention un premier et un deuxième procédé de fabrication d'un remblai autocompactant et réexcavable.

Ce procédé de fabrication comprend les étapes suivantes :

- une amenée d'un premier volume (V1) prédéterminé d'une composition de granulat dans une chambre de malaxage présentant un deuxième volume (V2) prédéterminé ;
- une amenée d'un troisième volume (V3) d'un mélange de ladite composition de liant hydraulique et d'eau ou d'une phase aqueuse; et
- un malaxage de ladite composition de granulat, de l'eau, et de la dite composition de liant hydraulique pour former ledit remblai autocompactant et réexcavable.

De préférence, le procédé comprend, précédemment à l'étape d'amenée dudit troisième volume (V3), une étape de mesure d'une différence de volume (ΔV) entre ledit deuxième volume prédéterminé (V2) et ledit premier volume prédéterminé (V1), ledit troisième volume (V3) et la différence de volume (ΔV) étant présents dans un rapport (V3)/(ΔV) compris entre 0,75 et 1,5.

Alternativement, ledit troisième volume (V3) est au moins égal à ladite différence de volume mesurée (ΔV).

De manière avantageuse, ladite première étape de ce procédé est précédée d'une étape de formation de ladite composition de granulat par une amenée d'au moins deux granulats, chaque granulat étant amené à un volume prédéterminé, pour former ledit premier volume (V1) de ladite composition de granulat.

Eventuellement, ladite première étape de ce procédé est précédée d'une étape de formation dudit troisième volume (V3) d'une pâte de la composition de liant par le mélange de ladite composition de liant hydraulique avec de l'eau ou une phase aqueuse.

Préférentiellement, l'eau et ladite composition de liant hydraulique sont amenées séparément dans la chambre de malaxage.

Alternativement, l'eau ou la phase aqueuse est amenée dans l'amenée du granulat, dans ladite chambre de malaxage, à ladite composition de remblayage, ou encore dans ladite amenée de la composition de liant hydraulique.

Eventuellement, au moins un superplastifiant est en outre ajouté à ladite composition de granulat, à ladite composition de liant hydraulique, ou à l'eau (ou à la phase aqueuse), ou encore séparément dans la chambre de malaxage.

De manière avantageuse, les étapes susmentionnées sont réalisées simultanément.

A titre illustratif, la composition de granulat peut être optimisée préalablement de la manière suivante: si cette composition de granulat ne se présente pas sous une courbe granulométrique souhaitée, il y a lieu d'effectuer, par exemple, un mélange de sable et de gravier afin que la composition de granulat qui résulte de ce mélange présente un profil, granulométrique qui s'approche de la courbe granulométrique théorique optimum définie par Fuller et Thompson pour une valeur de $n$ fixée dans le cadre de cet exemple à 0,40 et une valeur de D de 10 mm.

Dans ce contexte, le mélange du granulat et du sable, et donc la composition de granulat, est optimisé afin de limiter le volume de vide (ΔV).

Le dosage idéal du troisième volume comprenant la composition de liant hydraulique et l'eau de gâchage est de 1,05 × (ΔV), mais peut être choisi dans la plage de 0,75 × (ΔV) à 1,50 × (ΔV).

Le temps de maniabilité du produit frais étant de l'ordre de quelques minutes, le matériau doit être produit et mis en œuvre sur le lieu d'utilisation, aussi proche que possible de la fouille ou de la tranchée à remblayer.

Le procédé susmentionné comprend en outre une étape de placement dudit remblai autocompactant et réexcavable dans des tranchées.

La mise en œuvre du remblai selon ce premier procédé de fabrication peut prendre deux voies préférentielles :

## 1) Fabrication sur site en continu

Un système mobile, qui peut être monté de manière fixe ou mobile sur un camion ou une remorque et qui contient tous les constituants rentrant dans la fabrication du remblai ainsi que les systèmes de dosage et de préparation.

Les différents constituants du remblai sont introduits simultanément à l'entrée d'un malaxeur en continu de manière à obtenir la formulation souhaitée. A la sortie de ce malaxeur, le mélange est déversé directement dans la tranchée ou la fouille à remblayer. Dans le cadre de l'utilisation d'un malaxeur continu, il est important d'introduire simultanément tous les éléments constitutifs du remblai, dans les proportions préalablement requises : le dosage des différents constituants du remblai est en effet modulable et peut dès lors être adapté au type de tranchée qui doit être remblayée.

Ainsi, en fonction de la composition physico-chimique des particules et/ou des grains constitutifs du granulat de remblai et de la classe de remblai souhaitée, il y a lieu d'ajuster les fractions des composants de la composition de liant hydraulique, la fraction en granulat de remblai, et la fraction en eau.

Il est en outre possible de réaliser des pré-mélanges tels que :

(i) mélange de granulat et de sable ;
(ii) mélange de granulat avec un mélange de sable et de ciment alumineux ;
(iii) mélange de granulat avec un mélange composé de sable, de ciment alumineux, et de chaux hydratée ;
(iv) mélange d'eau et d'au moins un additif superplasfifiant ;
(v) mélange d'eau et de chaux hydratée ; et
(vi) mélange d'eau avec un mélange d'au moins un additif superplastifiant et de chaux hydratées.

Le temps de séjour dans la chambre de malaxage du malaxeur continu qui est inférieur à 2 minutes, idéalement inférieur à 1 minute.

2) Pré-mélange des constituants du remblai en usine et réalisation du mélange des constituants sur site

Il s'agit alors de préparer sur un site différent que celui de la mise en œuvre (par exemple en usine) deux mélanges : d'un côté, un mélange des différents granulats est réalisé pour produire un granulat de remblai présentant une courbe granulométrique définie. D'un autre côté, il s'agit de préparer un mélange de composition de liant et éventuellement d'un ou plusieurs additifs superplastifiants. Une fois sur chantier, de l'eau et ces deux mélanges sont introduits dans un dispositif de malaxage dans des teneurs respectives prédéfinies. Ce dispositif de malaxage peut être une bétonnière, un malaxeur planétaire ou encore un malaxeur continu (voir le procédé de fabrication 1).

Après sa fabrication, le remblai doit être mis en œuvre immédiatement. Il peut être déversé directement à la sortie de la chambre de malaxage dans la tranchée de fouille ou de raccordement à remblayer, pompé, ou encore transporté par une benne, une vis d'Archimède, ou un tapis.

Toutefois, pour chacun des modes de mise en œuvre susmentionné, il y a lieu de s'assurer que la maniabilité soit toujours suffisante lors de l'arrivée du mélange dans la zone à remblayer.

Un mode de production spécifique est l'utilisation d'un camion centrale, volumétrique ou pondérale. Il contient une à deux trémies agencées pour recevoir le granulat de remblai (ou ses constituants), et de un à trois silos permettant de recevoir la composition de liant hydraulique ou ses constituants, ou un pré-mélange de ceux-ci. Les différents constituants du remblai sont amenés à l'aide d'une vis d'Archimède et/ou d'un ou plusieurs tapis à l'entrée du malaxeur, tout comme l'eau et les éventuels additifs. Les différents constituants sont alors malaxés puis déversés dans la tranchée de fouille ou de raccordement à remblayer.

## Performances et évolution des résistances

Les deux principales caractéristiques du remblai qui ont été suivies sont les suivantes :

i) la caractérisation de la portance par essais de plaque (mesurée en MPa) ; et
ii) la caractérisation de la ré-excavabilité, par écrasement de cubes d'essais (mesurée en MPa).

Les valeurs usuelles d'essais de plaque sont les suivantes :

a) une valeur supérieure ou égale à 17 MPa obtenue dans les 60 minutes après la mise en œuvre, idéalement moins de 30 minutes après la mise en œuvre ;
b) une évolution, mesurée à 120 minutes et 180 minutes, de la valeur de l'essai de plaque de préférence supérieure à 25 MPa, de préférence comprise dans la plage de valeurs définie entre 25 et 60 MPa ; et
c) une valeur seuil acceptable d'écrasement de cubes qui ne doit pas être dépassée est mesurée à 28 jours et est fixée à 0,7 MPa pour un remblai de classe 1 (MAR 1).

Lors de sa mise en œuvre, le remblai est fluide. Sa valeur d'affaissement au cône d'Abrams est supérieure ou égale à 24 cm.

Le remblai est mise en œuvre à l'aide d'une centrale mobile *REIMER* de type *RA-850* montée sur un camion à quatre axes.

Quelques minutes après sa mise en œuvre, le remblai se fige, il ne doit plus être mis en mouvement sous peine de voir ses performances amoindries.

Dans le cadre de la présente invention, il a été observé, après un délai de 60 minutes après la mise en œuvre du remblai, une valeur de portance, mesurée à l'aide d'un essai de plaque (norme C.R.R. MF 40/78), supérieure ou égale à 33,0 MPa, et ce, en respectant une valeur de résistance à l'écrasement libre d'un cube d'arêtes de 15 cm de 0,47 MPa dans un délai de 28 jours après la mise en œuvre, ou comprise entre 0,38 et 0,55 MPa dans le délai de 28 jours.

Ces performances sont atteintes dans un milieu de réexcavation non-drainant saturé en eau pour un remblai présentant une densité de 2,139 kg/m$^3$ composé des constituants suivants par m$^3$ de remblai :
- 1) Composition de granulat présentant un taux d'humidité de 4% (en poids) composée de :
a) 1123 kg/m$^3$ d'un granulat graviers de carrière de courbe granulométrique continue comprise dans le fuseau suivant :

| Taille maille (d en mm) | PASSANT TOT* (%) |
|---|---|
| 12,5 | 100 |
| 11,2 | 100 |
| 10 | 100 |

(suite)

| Taille maille (d en mm) | PASSANT TOT* (%) |
|---|---|
| 9 | 100 |
| 8 | 95 |
| 7,1 | 87 |
| 6,3 | 76 |
| 5 | 50 |
| 4 | 30 |
| 3,15 | 17 |
| 2 | 4 |
| 1 | 1 |
| 0,5 | 0 |
| 0,2 | 0 |
| 0,063 | 0 |
| 0 | 0 |
| *: Fraction passante totale (en % sur base du poids total de la composition de granulat) du poids en particules et/ou de grains de granulat ou de sable. | |

b) 813 kg/m$^3$ de sable de rivière de courbe granulométrique continue comprise dans le fuseau suivant :

| Taille maille (d en mm) | PASSANT TOT* (%) |
|---|---|
| 12,5 | 100 |
| 11,2 | 100 |
| 10 | 100 |
| 9 | 100 |
| 8 | 100 |
| 7,1 | 99 |
| 6,3 | 98 |
| 5 | 95 |
| 4 | 92 |
| 3,15 | 90 |
| 2 | 85 |
| 1 | 74 |
| 0,5 | 49 |
| 0,2 | 3 |
| 0,063 | 0 |
| 0 | 0 |
| *: Fraction passante totale (en % sur base du poids total de la composition de granulat) du poids en particules et/ou de grains de granulat ou de sable. | |

- 2) 156 kg/m$^3$ d'une composition de liant hydraulique (soit 7 % en poids par rapport au poids de la composition de remblayage comprenant le mélange de gravier/sable/composition de liant hydraulique) comprenant :

a) des cendres volantes: 128 kg/m$^3$ (soit 82 % en poids sur base du poids total de la composition de liant hydraulique);
b) du ciment Alumineux : 24,9 kg/m$^3$ (soit 16 % en poids sur base du poids total de la composition de liant hydraulique);
c) de la chaux hydratée : 3,1 kg/m$^3$ (soit 2 % en poids sur base du poids total de la composition de liant hydraulique); et éventuellement
d) un fluidifiant (*Sika 1020®*) : 0,4 l /m$^3$.

- 3) 95 l / m$^3$ d'eau ajoutée en présence de fluidifiant; ou
- 4) 120 l /m$^3$ d'eau ajoutée en absence de fluidifiant.

Il est bien entendu que la présente invention n'est en aucune façon limitée aux formes de réalisations décrites ci-dessus et que bien des modifications peuvent y être apportées sans sortir du cadre des revendications annexées.

**Revendications**

1. Composition de liant hydraulique destinée à être utilisée pour former un remblai autocompactant et réexcavable, comprenant :

    - des cendres volantes dans une teneur comprise entre 70 % en poids et 90 % en poids, avantageusement entre 75 % en poids et 85 % en poids, sur base du poids total de composition de liant hydraulique ; et
    - du ciment alumineux dans une teneur comprise entre 5 % en poids et 20 % en poids, sur base du poids total de la composition de liant hydraulique,
    - de la chaux hydratée dans une teneur comprise entre 0,05 % en poids et 15 % en poids, de préférence entre 0,5 % en poids et 6 % en poids, avantageusement entre 1 % en poids et 5 % en poids, sur base du poids total de la composition de liant hydraulique,

    ladite composition de liant hydraulique étant destinée à être mélangée à une composition de granulat et à de l'eau pour former ledit remblai autocompactant et réexcavable.

2. Composition de liant hydraulique selon la revendication 1, dans laquelle lesdites cendres volantes présentent une courbe granulométrique **caractérisée par** un $d_{80}$ égal compris entre 0,04 mm et 0,125 mm.

3. Composition de liant hydraulique selon la revendication 1 ou 2, dans laquelle lesdites cendres volantes présentent une densité volumique de $2,31 \times 10^3$ kg/m$^3$ $\pm$ $0,20 \times 10^3$ kg/m$^3$.

4. Composition de remblayage autocompactant et réexcavable comprenant une composition de granulat et ladite composition de liant hydraulique selon l'une quelconque des revendications 1 à 3, ladite composition de remblayage étant prête à être gâchée avec de l'eau pour former un remblai autocompactant et réexcavable.

5. Composition de remblayage selon la revendication 4, **caractérisée en ce qu'**elle comprend :

    - ladite composition de granulat dans une teneur comprise entre 80 % en poids et 95 % en poids, de préférence entre 80,5 % en poids et 90 % en poids, sur base du poids total de ladite composition de remblayage ; et
    - ladite composition de liant hydraulique dans une teneur comprise entre 4 % en poids et 14 % en poids, de préférence entre 6 % en poids et 10 % en poids, sur base du poids total de ladite composition de remblayage.

6. Composition de remblayage selon la revendication 4 ou 5, dans laquelle ladite composition de granulat présente une courbe granulométrique centrée sur le fuseau granulométrique défini par l'équation de Fuller et Thompson suivante :

$$p = 100 \left(\frac{d}{D}\right)^n$$

où :

    - p représente la fraction passante (en % sur base du poids total de la composition de granulat) du poids en particules et/ou de grains de granulat ou de sable ;

- d représente la taille (en mm) des mailles du tamis ;
- D représente le diamètre maximal (en mm) des particules et/ou des grains de granulats, et est compris entre 5 et 10 mm ;
- $n$ est un facteur expérimental choisi dans une plage de valeur comprise entre 0,30 et 0,55
, **caractérisée en ce que** p est compris entre 0 et 100, et présente avantageusement une valeur comprise entre :

    a) une valeur p MIN = p- 15 ; et
    b) une valeur $p$ MAX = $p$ + 10.

7. Composition de remblayage selon l'une quelconque des revendications 4 à 6, dans laquelle la composition de granulat présente une distribution de tailles de particules et/ou de grains **caractérisée par** un $d_{100}$ compris entre 6 mm et 17 mm, un $d_{95}$ entre 5 mm et 12 mm, un $d_{50}$ entre 1 mm et 5 mm, et un $d_{30}$ entre 0,3 mm et 1 mm.

8. Composition de remblayage selon l'une quelconque des revendications 4 à 7, dans laquelle la composition de granulat présente une distribution de tailles de particules et/ou de grains **caractérisée par** un $d_{70}$ compris entre 3 et 7 mm.

9. Composition de remblayage selon l'une quelconque des revendications 4 à 8, dans laquelle la composition de granulat présente une distribution de tailles de particules et/ou de grains **caractérisée par** un $d_{30}$ compris entre 0,3 et 0,9 mm.

10. Composition de remblayage selon l'une quelconque des revendications 4 à 9, dans laquelle la composition de granulat présente une distribution de tailles de particules et/ou de grains **caractérisée par** un $d_{20}$ compris entre 0,1 et 0,5 mm.

11. Composition de remblayage selon l'une quelconque des revendications 4 à 10, dans laquelle ladite composition de granulat comprend des particules et/ou des grains qui sont du sable naturel, du sable de concassage, des granulats de carrière ainsi que des granulats recyclés, ou un de leurs mélanges.

12. Remblai autocompactant et réexcavable comprenant ladite composition de remblayage selon l'une quelconque des revendications 4 à 11 et de l'eau.

13. Procédé de fabrication du remblai autocompactant et réexcavable selon la revendication 12, comprenant les étapes suivantes :

    a) une amenée d'un premier volume (V1) prédéterminé d'une composition de granulat dans une chambre de malaxage présentant un deuxième volume (V2) prédéterminé ;
    b) une amenée d'un troisième volume (V3) d'un mélange de ladite composition de liant hydraulique selon l'une quelconque des revendications 1 à 3 et d'eau ou d'une phase aqueuse; et
    c) un malaxage de ladite composition de granulat, de l'eau ou de la phase aqueuse, et de la dite composition de liant hydraulique pour former ledit remblai autocompactant et réexcavable.

14. Utilisation de la composition de liant hydraulique selon l'une quelconque des revendications 1 à 3, pour la formation d'un remblai autocompactant et réexcavable, ladite composition de liant hydraulique étant destinée à être mélangée à une composition de granulat et à de l'eau pour former ledit remblai autocompactant et réexcavable.

15. Utilisation de la composition remblayage selon l'une quelconque des revendications 4 à 11, pour la formation d'un remblai autocompactant et réexcavable, ladite composition de remblayage étant destinée à être mélangée à de l'eau pour former ledit remblai autocompactant et réexcavable.

**Patentansprüche**

1. Zusammensetzung eines hydraulischen Bindemittels, die dazu bestimmt ist, verwendet zu werden, um eine selbstverdichtende und erneut herauslösbare Auffüllung zu bilden, umfassend:

- Flugasche mit einem Gehalt zwischen 70 Gew.-% und 90 Gew.-%, vorteilhafterweise zwischen 75 Gew.-% und 85 Gew.-%, auf Basis des Gesamtgewichts der Zusammensetzung eines hydraulischen Bindemittels; und

- Tonerdezement mit einem Gehalt zwischen 5 Gew.-% und 20 Gew.-%, auf Basis des Gesamtgewichts der Zusammensetzung eines hydraulischen Bindemittels,
- Löschkalk mit einem Gehalt zwischen 0,05 Gew.-% und 15 Gew.-%, vorzugsweise zwischen 0,5 Gew.-% und 6 Gew.-%, vorteilhafterweise zwischen 1 Gew.-% und 5 Gew.-%, auf Basis des Gesamtgewichts der Zusammensetzung eines hydraulischen Bindemittels,

wobei die Zusammensetzung eines hydraulischen Bindemittels dazu bestimmt ist, mit einer Granulatzusammensetzung und mit Wasser gemischt zu werden, um die selbstverdichtende und erneut herauslösbare Auffüllung zu bilden.

2. Zusammensetzung eines hydraulischen Bindemittels nach Anspruch 1, wobei die Flugasche eine granulometrische Kurve aufweist, die durch einen d80 gleich zwischen 0,04 mm und 0,125 mm gekennzeichnet ist.

3. Zusammensetzung eines hydraulischen Bindemittels nach Anspruch 1 oder 2, wobei die Flugasche eine Rohdichte von $2{,}31 \times 10^3$ kg/m3 $\pm$ $0{,}20 \times 10^3$ kg/m3 aufweist.

4. Selbstverdichtende und erneut herauslösbare Auffüllungszusammensetzung, umfassend eine Granulatzusammensetzung und die Zusammensetzung eines hydraulischen Bindemittels nach einem der Ansprüche 1 bis 3, wobei die Auffüllungszusammensetzung bereit ist, um mit Wasser angerührt zu werden, um eine selbstverdichtende und erneut herauslösbare Auffüllung zu bilden.

5. Auffüllungszusammensetzung nach Anspruch 4, **dadurch gekennzeichnet, dass** sie umfasst:

- die Granulatzusammensetzung mit einem Gehalt zwischen 80 Gew.-% und 95 Gew.-%, vorzugsweise zwischen 80,5 Gew.-% und 90 Gew.-%, auf Basis des Gesamtgewichts der Auffüllungszusammensetzung; und
- die Zusammensetzung eines hydraulischen Bindemittels mit einem Gehalt zwischen 4 Gew.-% und 14 Gew.-%, vorzugsweise zwischen 6 Gew.-% und 10 Gew.-%, auf Basis des Gesamtgewichts der Auffüllungszusammensetzung.

6. Auffüllungszusammensetzung nach Anspruch 4 oder 5, wobei die Granulatzusammensetzung eine granulometrische Kurve aufweist, die auf dem Kornband zentriert ist, das durch die folgende Fuller- und Thompson-Gleichung definiert ist:

$$p = 100 \left(\frac{d}{D}\right)^{n}$$

wobei:

- p die Überkornfraktion (in % auf Basis des Gesamtgewichts der Granulatzusammensetzung) des Gewichts von Teilchen und/oder Körnern von Granulat oder Sand darstellt;
- d die Größe (in mm) der Maschen des Siebs darstellt;
- D den maximalen Durchmesser (in mm) der Teilchen und/oder Körner von Granulaten darstellt und zwischen 5 und 10 mm liegt;
- n ein experimenteller Faktor ist, der aus einem Wertebereich zwischen 0,30 und 0,55 ausgewählt ist,

**dadurch gekennzeichnet, dass** p zwischen 0 und 100 liegt und vorteilhafterweise einen Wert aufweist zwischen:

a) einem Wert p MIN = p - 15; und
b) einem Wert p MAX = p + 10.

7. Auffüllungszusammensetzung nach einem der Ansprüche 4 bis 6, wobei die Granulatzusammensetzung eine Verteilung von Teilchen- und/oder Korngrößen aufweist, die durch einen $d_{100}$ zwischen 6 mm und 17 mm, einen $d_{95}$ zwischen 5 mm und 12 mm, einen $d_{50}$ zwischen 1 mm und 5 mm und einen $d_{30}$ zwischen 0,3 mm und 1 mm gekennzeichnet ist.

8. Auffüllungszusammensetzung nach einem der Ansprüche 4 bis 7, wobei die Granulatzusammensetzung eine Verteilung von Teilchen- und/oder Korngrößen aufweist, die durch einen $d_{70}$ zwischen 3 und 7 mm gekennzeichnet ist.

9. Auffüllungszusammensetzung nach einem der Ansprüche 4 bis 8, wobei die Granulatzusammensetzung eine Verteilung von Teilchen- und/oder Korngrößen aufweist, die durch einen $d_{30}$ zwischen 0,3 und 0,9 mm gekennzeichnet ist.

10. Auffüllungszusammensetzung nach einem der Ansprüche 4 bis 9, wobei die Granulatzusammensetzung eine Verteilung von Teilchen- und/oder Korngrößen aufweist, die durch einen $d_{20}$ zwischen 0,1 und 0,5 mm gekennzeichnet ist.

11. Auffüllungszusammensetzung nach einem der Ansprüche 4 bis 10, wobei die Granulatzusammensetzung Teilchen und/oder Körner umfasst, die natürlicher Sand, Brechsand, Grubengranulate sowie recycelte Granulate oder eine der Mischungen davon sind.

12. Selbstverdichtende und erneut herauslösbare Auffüllung, umfassend die Auffüllungszusammensetzung nach einem der Ansprüche 4 bis 11 und Wasser.

13. Verfahren zur Herstellung der selbstverdichtenden und erneut herauslösbaren Auffüllung nach Anspruch 12, umfassend die folgenden Schritte:

a) eine Zufuhr eines ersten vorbestimmten Volumens (V1) einer Granulatzusammensetzung in eine Durchmischkammer, die ein zweites vorbestimmtes Volumen (V2) aufweist;
b) eine Zufuhr eines dritten Volumens (V3) einer Mischung aus der Zusammensetzung eines hydraulischen Bindemittels nach einem der Ansprüche 1 bis 3 und Wasser oder einer wässrigen Phase; und
c) Durchmischen der Granulatzusammensetzung, des Wassers oder der wässrigen Phase und der Zusammensetzung eines hydraulischen Bindemittels, um die selbstverdichtende und erneut herauslösbare Auffüllung zu bilden.

14. Verwendung der Zusammensetzung eines hydraulischen Bindemittels nach einem der Ansprüche 1 bis 3 zur Bildung einer selbstverdichtenden und erneut herauslösbaren Auffüllung, wobei die Zusammensetzung eines hydraulischen Bindemittels dazu bestimmt ist, mit einer Granulatzusammensetzung und mit Wasser gemischt zu werden, um die selbstverdichtende und erneut herauslösbare Auffüllung zu bilden.

15. Verwendung der Auffüllungszusammensetzung nach einem der Ansprüche 4 bis 11 zur Bildung einer selbstverdichtenden und erneut herauslösbaren Auffüllung, wobei die Auffüllungszusammensetzung dazu bestimmt ist, mit Wasser gemischt zu werden, um die selbstverdichtende und erneut herauslösbare Auffüllung zu bilden.

**Claims**

1. Hydraulic binder composition intended to be used to form a self-compacting and re-excavatable backfill, comprising:

- fly ash in a content of between 70 weight % and 90 weight %, advantageously between 75 weight % and 85 weight %, based on the total weight of hydraulic binder composition;
and
- aluminous cement in a content of between 5 weight % and 20 weight %, based on the total weight of the hydraulic binder composition,
- hydrated lime in a content of between 0.05 weight % and 15 weight %, preferably between 0.5 weight % and 6 weight %, advantageously between 1 weight % and 5 weight %, based on the total weight of the hydraulic binder composition,

said hydraulic binder composition being intended to be mixed with a granulate composition and water to form said self-compacting and re-excavatable backfill.

2. Hydraulic binder composition according to claim 1, wherein said fly ash has a granulometric curve **characterized by** a $d_{80}$ equal of between 0.04 mm and 0.125 mm.

3. Hydraulic binder composition according to claim 1 or 2, wherein said fly ash has a volume density of $2.31 \times 10^3$ kg/m$^3$ $\pm$ $0.20 \times 10^3$ kg/m$^3$.

4. Self-compacting and re-excavatable backfill composition comprising a granulate composition and said hydraulic binder composition according to any one of claims 1 to 3, said backfill composition being ready to be mixed with water to form a self-compacting and re-excavatable backfill.

5. Backfill composition according to claim 4, **characterized in that** it comprises:

- said granulate composition in a content of between 80 weight % and 95 weight %, preferably between 80.5 weight % and 90 weight %, based on the total weight of said backfill composition; and
- said hydraulic binder composition in a content of between 4 weight % and 14 weight %, preferably between 6 weight % and 10 weight %, based on the total weight of said backfill composition.

6. Backfill composition according to claim 4 or 5, wherein said granulate composition has a granulometric curve centred on the granulometric range defined by the following Fuller and Thompson equation:

$$p = 100 \left(\frac{d}{D}\right)^n$$

wherein:

- $p$ is the passing fraction (in % based on the total weight of the granulate composition) of the weight of particles and/or grains of granulate or sand;
- $d$ represents the size (in mm) of the meshes of the sieve;
- $D$ represents the maximum diameter (in mm) of the particles and/or grains of granulate, and is between 5 and 10 mm;
- $n$ is an experimental factor chosen in a range of values between 0.30 and 0.55, **characterized in that** p is between 0 and 100, and advantageously has a value between:

a) a $p$ MIN value = $p$ - 15; and
b) a $p$ MAX value = $p$ + 10.

7. Backfill composition according to any one of claims 4 to 6, wherein the granulate composition has a particle and/or grain size distribution **characterized by** a $d_{100}$ of between 6 mm and 17 mm, a $d_{95}$ of between 5 mm and 12 mm, a $d_{50}$ of between 1 mm and 5 mm, and a $d_{30}$ of between 0.3mm and 1 mm.

8. Backfill composition according to any one of claims 4 to 7, wherein the granulate composition has a particle and/or grain size distribution **characterized by** a $d_{70}$ of between 3 and 7 mm.

9. Backfill composition according to any one of claims 4 to 8, wherein the granulate composition has a particle and/or grain size distribution **characterized by** a $d_{30}$ of between 0.3 and 0.9 mm.

10. Backfill composition according to any one of claims 4 to 9, wherein the granulate composition has a particle and/or grain size distribution **characterized by** a $d_{20}$ of between 0.1 and 0.5 mm.

11. Backfill composition according to any one of claims 4 to 10, wherein said granulate composition comprises particles and/or grains which are natural sand, crushed sand, quarry granulates as well as recycled granulates, or a mixture thereof.

12. Self-compacting and re-excavatable backfill comprising said backfill composition according to any one of claims 4 to 11 and water.

13. Method of producing the self-compacting and re-excavatable backfill according to claim 12, comprising the following steps of:

a) feeding a first predetermined volume (V1) of a granulate composition into a mixing chamber having a second predetermined volume (V2);
b) feeding a third volume (V3) of a mixture of said hydraulic binder composition according to any one of claims 1 to 3 and water or an aqueous phase; and

c) mixing said granulate composition, water or the aqueous phase, and said hydraulic binder composition to form said self-compacting and re-excavatable backfill.

14. Use of the hydraulic binder composition according to any one of claims 1 to 3, for forming a self-compacting and re-excavatable backfill, said hydraulic binder composition being intended to be mixed with a granulate composition and water to form said self-compacting and re-excavatable backfill.

15. Use of the backfill composition according to any one of claims 4 to 11, for forming a self-compacting and re-excavatable backfill, said backfill composition being intended to be mixed with water to form said self-compacting and re-excavatable backfill.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1298254 A1

**Littérature non-brevet citée dans la description**

- *CME 01.01 - ANALYSE GRANULOMETRIQUE DES SOLS: METHODE PAR TAMISAGE ET METHODE AREOMETRIQUE,* 2012